# EUROPÄISCHE PATENTANMELDUNG

(11) **EP 2 911 412 A1**
(43) Veröffentlichungstag der Anmeldung: **26.08.2015**
(21) Anmeldenummer: 15154194.3
(22) Anmeldetag: 06.02.2015
(51) Int. Cl.: H04R 1/02, H04R 29/00, G10K 11/178, A47C 15/00, B60R 11/02, B60N 2/48, B64D 11/06, H04M 1/11

(54) **Akustikmodul zur Schallabsorption und Verbesserung der Kommunikation**

(30) Priorität: 19.02.2014 EP 14155675
(71) Anmelder: Fraunhofer-Gesellschaft zur Förderung der angewandten Forschung e.V., 80686 München (DE)
(72) Erfinder: Bauer, Wilhelm, 70195 Stuttgart (DE); Rief, Stefan, 70176 Stuttgart (DE); Schmidt, Michael, 70180 Stuttgart (DE)
(74) Vertreter: Mammel und Maser

(57) **Zusammenfassung**

Die Erfindung betrifft ein Akustikmodul zur Schallabsorption und Verbesserung der Kommunikation, insbesondere in Arbeits- und Büroumgebungen, mit einem flächenförmigen Grundkörper (12), der zumindest eine schallabsorbierende Schicht umfasst, und eine Kopfstütze bildet, mit zumindest einem am Grundkörper (12) angeordneten Abschnitt (39), der trennwandähnlich ausgebildet und zum flächigen Grundkörper (12) ausrichtbar ist, mit zumindest einem Mikrofon (20) und zumindest einem Lautsprecher (19), die mit einer Steuerungseinrichtung (22) verbunden sind und am oder in dem Abschnitt (39) am Grundkörper (12) vorgesehen sind, (12), wobei zumindest ein feststehender oder zumindest ein schwenkbarer Abschnitt (39) am Grundkörper (12) vorgesehen ist, der eine Seitenfläche (24) umfasst, welche eine Schallabsorptionsebene (25) bildet und in oder an dem Abschnitt (39) zumindest ein Abstandssensor (41) vorgesehen ist, der zumindest einen Abstand zwischen der Seitenfläche (24) des Abschnitts (39) und einem Ohr des Benutzers erfasst.

## Beschreibung

**Akustikmodul zur Schallabsorption und Verbesserung der Kommunikation**

Die Erfindung betrifft ein Akustikmodul zur Schallabsorption und Verbesserung der Kommunikation für einen Nutzer.

In offenen Bürostrukturen, zum Beispiel Open Space Office, werden Konzentrationsfähigkeit, Wohlbefinden und Stressempfinden der Nutzer in hohem Maße durch die akustische Situation bestimmt. Im Zusammenwirken mit Maßnahmen zur visuellen Abschirmung trägt die akustische Abschirmung zur Erzeugung von sogenannter Privatheit bei. Privatheit bedeutet, dass beispielsweise die Bewegung, die Sprache, das Verhalten des einzelnen Nutzers nicht oder nur in geringem Umfang von anderen Nutzern wahrgenommen wird. Aus arbeitsorganisatorischen Anforderungen wird häufig eine räumliche Offenheit angestrebt. Oft spielen auch architektonische oder bautechnische Gründe eine Rolle, die zu offenen und zugleich schallhart ausgebildeten Büroräumen führen. Durch die Zunahme des Spracheintrags, wie beispielsweise durch Webkonferenzen oder Telefonkonferenzen, steigen die akustischen Belastungen.

Zur Optimierung der Raumakustik sind beispielsweise Raumgliederungselemente oder Trennwandsysteme mit schallabsorbierenden Materialien bekannt. Auch werden Schrankelemente mit schallabsorbierenden Oberflächen zur Verbesserung der Raumakustik eingesetzt. Allerdings werden solche Mobiliare rückläufig verwendet, da die Lagerung von Papier basierten Dokumenten aufgrund der modernen Kommunikationstechnologien mehr und mehr zurück geht und offene, kommunikative Büroformen immer mehr bevorzugt werden.

Des Weiteren ist ein Lösungsansatz für eine akustische und visuelle Privatheit für den Benutzer bekannt geworden, welche eine kapuzenhafte Ausbildung von einem oberen Abschluss eines Bürostuhls oder Bürosessels umfasst. Dadurch entsteht eine räumliche Situation für den Nutzer, in der sich dieser akustisch sehr stark selbst wahrnimmt und zugleich vom restlich umgebenden Raum entkoppelt wird. Diese Situation wird von den Nutzern in der Regel als sehr unangenehm empfunden, da auch durch den fehlenden Bezug zur erweiterten Arbeitsumgebung der tatsächliche Grad der akustischen Privatheit für den Nutzer nicht einzuschätzen ist.

Ein weiterer Ansatz zur Optimierung der akustischen Situation in Arbeitsund Büroumgebungen stellt die Nutzung von direkt am Körper getragenen Headsets beziehungsweise einer Sprechgarnitur oder eines Kopfsprechhörers dar. Diese dienen in erster Linie der Erhöhung der Sprachverständlichkeit zum räumlich-entfernten Kommunikationspartner im Rahmen von Telefonaten, Telefon- oder Webkonferenzen. Diese werden vor allem in Callcentern eingesetzt, in denen die Nutzer nahezu permanent über Telefon kommunizieren.

In üblichen Büroarbeitssituationen finden jedoch oftmals spontane, ungeplante Telefonate oder Webkonferenzen statt. Die Nutzer lehnen solche Headsets ab, da diese entweder mit Hilfe eines Bügels direkt am Kopf, am Nacken oder als In-Ear-Lösung angeboten werden und somit entweder permanent direkt am Körper getragen werden müssen oder erst für ein Telefonat angezogen sowie gegebenenfalls justiert werden müssen.

Diesem kann dahingehend eine Abhilfe geschaffen werden, indem sogenannte Freisprecheinrichtungen verwendet werden, welche beispielsweise aus der JP 11-113080 A bekannt sind. In einer Kopfstütze sind Lautsprecher integriert, und mittels eines Schwanenhalses wird ein Mikrofon zum Mund des Benutzers ausgerichtet.

Aus der JP 2001-095646 ist ein Kraftfahrzeug mit einem Sitz bekannt, bei welchem die Kopfstütze bezüglich der Position der sitzenden Person in der Höhe durch eine Einstellvorrichtung einstellbar ist. Des Weiteren weist die Kopfstütze seitlich schwenkbare Abschnitte auf, welche im Abstand zu den Ohren des Benutzers durch die Einstelleinrichtung einstellbar und in einem Winkel von circa 0 bis 30° auf den Kopf des Benutzers zuschwenkbar sind. In den seitlichen Abschnitten sind ein Lautsprecher und ein Telefon ineinander integriert, so dass der Benutzer Musik hören und telefonieren kann. Diese Anordnung weist den Nachteil auf, dass die Positionierung der schwenkbaren Abschnitte, insbesondere in der Winkelstellung zum Ohr, beschränkt ist. Zudem wählt der Nutzer eine zufällige Positionierung des Mikrofons, so dass dadurch zusätzlicher Schall und Sprache aus der Umgebung eingetragen wird und sowohl beim Telefonieren stört als auch beim Musik hören beeinträchtigt.

Des Weiteren werden bei der Kommunikation über die Freisprecheinrichtung zusätzlicher Schall und Sprache des räumlich-entfernten Kommunikations-partners in die Umgebung eingetragen, wodurch wiederum die anderen Benutzer gestört werden.

Der Erfindung liegt deshalb die Aufgabe zugrunde, ein Akustikmodul zu schaffen, welches zum einen eine gewisse Privatheit für den Nutzer schafft und zum anderen eine Optimierung der Raumakustik und des akustischen Empfindens des Nutzers ermöglicht, wobei auch ein angenehmes Telefonieren ermöglicht sein soll, ohne dass ein Kopfsprechhörer permanent am Körper getragen oder erst für ein Telefonat angezogen werden müsste.

Diese Aufgabe wird durch ein Akustikmodul zur Schallabsorption und Verbesserung der Kommunikation, insbesondere Telekommunikation, ermöglicht, bei dem zumindest ein feststehender oder zumindest ein schwenkbarer Abschnitt eine Seitenfläche umfasst, welche eine Schallabsorptionsebene bildet und in dem Abschnitt zumindest ein Abstandssensor vorgesehen ist, der zumindest einen Abstand zwischen der Seitenfläche des Abschnitts am Grundkörper und einen Ohr des Benutzers erfasst. Durch den zumindest einen Abstandssensor kann auch eine Position des Kopfes des Benutzers erfasst werden. Dadurch wird ermöglicht, dass eine Optimierung der akustischen Situation nicht nur in offenen Büroumgebungen oder Arbeitsumgebungen geschaffen ist, sondern auch in Aufenthaltsräumen, Wartehallen oder Verkehrsmitteln. Durch die Ausbildung des physischen Grundkörpers mit einer Schallabsorptionsebene an den zumindest einen feststehenden oder schwenkbaren Abschnitt, welche vorzugsweise durch die schallabsorbierende Schicht gebildet ist, wird eine akustische Privatheit des Benutzers gegenüber anderen Störungen in einer offenen Arbeitsumgebung erhöht. Gleichzeitig kann der Abstand des am Grundkörper angeordneten Abschnitts optimal zum Kopf des Benutzers ausgerichtet werden. Beispielsweise kann durch den Abstandssensor bei einem bevorzugten Abstand oder einer Position des Kopfes beziehungsweise Ohres des Benutzers zum Abschnitt des Akustikmoduls ein Signal, insbesondere ein akustisches Signal, ausgegeben werden. Dadurch erkennt der Benutzer, dass er eine für die Akustik optimale Position eingenommen hat oder er kann den Abschnitt optimal an seine Kopfposition anpassen. Gleiches kann gelten, wenn der Benutzer den optimalen Abstand oder die Position zum Abschnitt verlässt. Zudem wird auch eine visuelle Privatheit des Nutzers geschaffen. Darüber hinaus ist der Spracheintrag in die Umgebung und somit die Störung von anderen Personen im Raum durch die unmittelbare Nähe des Mikrofons und des Lautsprechers zum telefonierenden Nutzer reduziert. Gleichzeitig kann durch ein solches Akustikmodul das Anziehen und gegebenenfalls Einjustieren von Kopfsprechhörern entfallen. Dadurch kann auch ungestört Musik gehört werden. Je mehr Nutzer ein solches Akustikmodul nutzen, umso mehr verbessert sich die akustische Situation von Open Space Office-Strukturen beziehungsweise Großraumbüros oder sonstigen Räumlichkeiten.

Des Weiteren ist bevorzugt zumindest ein Motor zur Ansteuerung einer Schwenkbewegung des schwenkbaren Abschnitts zum Grundkörpers vorgesehen. Dadurch wird beispielsweise durch die Betätigung eines Bedienelementes an der Steuerungseinrichtung ein Einstellvorgang gestartet, so dass sich der schwenkbare Abschnitt selbstständig auf den Kopf des Benutzers zu schwenkt und vorzugsweise in einem vorbestimmten Abstand zum Kopf des Benutzers die Schwenkbewegung des Abschnitts stoppt, so dass optimale raumakustische Gegebenheiten vorliegen. Alternativ kann der Benutzer durch ein Bedienelement der Steuerungseinrichtung die Winkelposition des schwenkbaren Abschnitts zum Grundkörper nach Belieben einstellen. Der Abstandssensor kann während einer Verfahrbewegung auf das Ohr des Benutzers zu fortwährend oder in Intervallen den noch verbleibenden Abstand erfassen und setzt bevorzugt bei einem vorbestimmten Abstand die Verfahrbewegung still. Dadurch kann eine selbständige, also eine autoadaptive, Einstellung der schwenkbaren Abschnitte am Grundkörper zum Benutzer erfolgen.

Bevorzugt ist der zumindest eine schwenkbare Abschnitt in einem Winkel von 30 bis 110° zur Anlagefläche des Grundkörpers schwenkbar. Somit kann der schwenkbare Abschnitt einerseits in einer Ebene zum Grundkörper liegend angeordnet und demgegenüber nach einer Schwenkbewegung innerhalb eines Schwenkbereiches von bis zu 100° abgewinkelt angeordnet sein. Dadurch ist eine individuelle Anpassung in die Benutzergewohnheiten möglich.

An dem Grundkörper sind bevorzugt zwei schwenkbare Abschnitte einander gegenüberliegend angeordnet, die innerhalb eines Schwenkbereiches auf einer gemeinsamen Ebene zum Grundkörper in eine im Wesentlichen U-förmige Anordnung überführbar sind. Dadurch kann eine Geborgenheit für den Benutzer geschaffen werden, indem sich jeweils an beiden Seiten des Kopfes die schwenkbaren Abschnitte erstrecken, so dass eine Einkapselung einerseits, jedoch auch ein freies Sichtfeld andererseits gegeben sein kann.

Bevorzugt erfasst der Abstandssensor während der Benutzung des Lautsprechers und des Mikrofons zumindest in Zeitintervallen den Abstand zwischen der Stirnfläche des schwenkbaren Abschnitts und des Benutzers und steuert vorzugsweise eine aktive Anpassung des Abstandes zwischen dem schwenkbaren Abschnitts und dem Ohr des Benutzers an. Dadurch können selbst bei Kopfbewegungen des Benutzers nahezu gleichbleibende Verhältnisse geschaffen werden. Bevorzugt wird das Nachfahren einer Stellbewegung des zumindest einen schwenkbaren Abschnitts zum Grundkörper zeitverzögert und insbesondere geschwindigkeitsverzögert ausgeführt, so dass eine Veränderung in der Winkellage des schwenkbaren Abschnitts zum Grundkörper bei sich grundsätzlich verändernden Positionen des Kopfes vom Benutzer nachgefahren werden.

Eine weitere vorteilhafte Ausgestaltung des Akustikmoduls sieht vor, dass beide schwenkbaren Abschnitte unabhängig voneinander schwenkbar angesteuert sind. Alternativ können diese auch synchron angesteuert und bewegt werden.

Des Weiteren kann vorgesehen sein, dass der Grundkörper von einer schalldurchlässigen Außenhülle umgeben ist. Dabei wird bevorzugt der Kern des Grundkörpers durch ein schallabsorbierendes Material gebildet. Dies ermöglicht eine hohe Gestaltungsfreiheit für die optisch sichtbare Fläche des Grundkörpers.

Eine weitere bevorzugte Ausgestaltung des Akustikmoduls sieht den zumindest einen Lautsprecher und/oder das zumindest eine Mikrofon in oder auf der Schallabsorptionsebene vor. In Abhängigkeit der Designgestaltung können beispielsweise Lautsprecher und Mikrofon in der Schall-absorptionsebene integriert sein, so dass diese Elemente verdeckt oder integriert sind. Alternativ können auch der Lautsprecher und/oder das Mikrofon bewusst gegenüber der Schallabsorptionsebene hervorgehoben oder auf dieser angebracht sein.

Eine vorteilhafte Ausführungsform der Erfindung sieht vor, dass das Mikrofon und der Lautsprecher in einer Einheit vorgesehen sind. Dadurch kann ein vereinfachter Einbau und Ausgestaltung des Akustikmoduls vorgesehen sein.

Alternativ ist auch möglich, dass zumindest ein Mikrofon getrennt zum zumindest einen Lautsprecher angeordnet ist und dass das Mikrofon dem Mund des Nutzers sowie der Lautsprecher einem Ohr des Nutzers zugeordnet und entsprechend zueinander beabstandet sind. Dadurch können eine weitere Verbesserung der Akustik einerseits und eine Reduzierung im Eintrag von Störgeräuschen in die Umgebung andererseits ermöglicht sein.

Die Steuerungseinrichtung des Akustikmoduls weist bevorzugt ein Funkmodul zur drahtlosen Kommunikation mit einer Datenverarbeitungseinrichtung, insbesondere einem PC, Notebook oder Tablet, oder mit einem Tisch- oder Mobiltelefon auf. Dabei kann das Funkmodul auf bekannte Techniken, wie beispielsweise WLAN, Bluetooth, Nahfeldkommunikation oder dergleichen, zurückgreifen. Alternativ kann auch vorgesehen sein, dass eine kabelgebundene Übertragung möglich ist.

Zur Verbesserung der Kommunikation ist vorteilhafterweise vorgesehen, dass das Mikrofon als Richtmikrofon ausgebildet ist und die Steuerungseinrichtung eine elektronische Steuerung für den Sprach-Frequenz-Bereich und die Nahbesprechung umfasst, um auch Rückkopplungen des Systems zu untersprechen sowie Nebengeräusche und Störgeräusche herauszufiltern. Dadurch kann eine weitere Verbesserung des Akustikmoduls geschaffen werden.

Der Grundkörper des Akustikmoduls weist vorteilhafterweise zumindest ein Bedienelement zur Ansteuerung der Steuerungseinrichtung auf. Dies kann im einfachsten Fall eine Ein-/Aus-Taste sein, wodurch eine Inbetriebnahme der Steuerungseinrichtung erfolgen kann. Das kann des Weiteren beispielsweise ein TouchPad sein. Es können auch mehrere Bedienelemente zur Ansteuerung der Steuerungseinrichtung vorgesehen sein.

Bevorzugt umfasst der Grundkörper Akkumulatoren, so dass eine autarke Benutzung ohne ein Stromkabel möglich ist. Alternativ oder zusätzlich können auch Solarzellen vorgesehen sein, die für die Energieversorgung der Steuerungseinrichtung sowie des Mikrofons und des Lautsprechers sorgen.

Der flächenförmige Grundkörper des Akustikmoduls weist bevorzugt einen Rahmen, eine Gitterstruktur oder einen Wabentragkörper auf. Dadurch können ein leichtes Akustikmodul und eine einfache Integration der elektrischen Komponenten ermöglicht werden.

Bevorzugt ist die absorbierende Schicht als Kern und/oder als Außenhülle des Grundkörpers ausgebildet. Bei einer ersten Ausführungsform kann beispielsweise der Grundkörper einen schallabsorbierenden Kern umfassen, wobei die den Kern umgebende Außenhülle beispielsweise schalldurchlässig ist. Dabei kann es sich beispielsweise um eine perforierte Kunststoffhülle handeln, die gut zu reinigen ist. Alternativ kann auch vorgesehen sein, dass die Außenhülle des Grundkörpers schallabsorbierend ist und der Kern des Grundkörpers lediglich die Form des Grundkörpers bildet oder zusätzlich als schallabsorbierendes Element ausgebildet ist oder schallabsorbierendes Material umfasst.

Bevorzugt ist die schallabsorbierende Außenhülle aus Faserdämmmaterialien, Textilfasern oder dergleichen ausgebildet. Dies ermöglicht zum einen eine hohe Schallabsorption und zum anderen die Ausgestaltung von verschiedenen Designs.

Vorteilhafterweise sind im Grundkörper ein offenporiger Schaum, Faserdämmmaterialien oder Materialien mit Mikroperforation vorgesehen, um die Schallabsorption weiter zu optimieren. Alternativ kann ein Rahmen, eine Gitterstruktur und/oder eine Wabentragstruktur, die Teil eines Kerns des Grundkörpers bilden, mit einem schallabsorbierenden Material ausgefüllt sein. Gemäß einer Ausführung kann zusätzlich noch eine schallabsorbierende Außenhülle angebracht werden. Alternativ kann auch eine schalldurchlässige Außenhülle einen solchen Kern umgeben.

An dem flächenförmigen Grundkörper ist zumindest ein Befestigungselement vorgesehen. Mittels eines solchen Befestigungselementes kann das Akustikmodul beispielsweise an einem Bürostuhl, Bürodrehstuhl oder an einem weiteren Mobiliar befestigbar sein, so dass ein flexibler Einsatz ermöglicht ist. Das Befestigungselement kann zur Befestigung an einer Armlehne, einer Rückenlehne und/oder Nackenstütze vorgesehen sein so dass der flächenförmige Grundkörper beispielsweise einseitig eine Abschirmung bezüglich der Privatheit bildet und gleichzeitig drahtlose Kommunikation möglich ist.

Bei der Dimensionierung des flächenförmigen Grundkörpers des Akustikmoduls ist bevorzugt vorgesehen, dass der Grundkörper eine Kopfgröße des Nutzers angepasste Höhe oder eine größere Höhe aufweist. Die auf die Kopfgröße des Nutzers angepasste Höhe reicht bereits aus, um einerseits eine akustische Abschirmung zu schaffen und dennoch den Nutzer in seiner Privatheit nicht unnötig einzuschränken.

Des Weiteren ist bevorzugt vorgesehen, dass der Grundkörper einen vorderen schmaleren Bereich als einen rückseitigen Bereich umfasst. Dadurch kann eine weitere Optimierung in Gewicht und Größe des Grundkörpers geschaffen werden. Des Weiteren ist vorteilhafterweise vorgesehen, dass ein symmetrischer Aufbau von dem zumindest einen Mikrofon und dem zumindest einen Lautsprecher zur Längsachse des Grundköpers geschaffen ist. Dadurch kann dieses Akustikmodul sowohl zur Abschirmung einer rechten als auch einer linken Seite des Nutzers wahlweise eingesetzt werden.

Eine weitere vorteilhafte Ausgestaltung des Grundkörpers sieht vor, dass dieser zumindest einen schwenkbaren Abschnitt aufweist, in welchem zumindest ein Mikrofon vorgesehen ist. Dadurch kann dieses Mikrofon näher zum Mund herangeführt werden und eine bessere Sprachaufnahme ermöglicht sein. Beispielsweise können auch in einem solch schwenkbaren Abschnitt ein Display und/oder eine Kamera vorhanden sein, so dass Videokonferenzen ermöglicht sind.

Eine bevorzugte Ausführungsform des Grundkörpers sieht vor, dass dieser eine U-förmige Kontur aufweist, wobei vorzugsweise beide Schenkel als schwenkbare Abschnitte ausgebildet sind. In diesen beiden Schenkeln kann das zumindest eine Mikrofon vorgesehen sein. Vorzugsweise sind zumindest ein Lautsprecher und ein Mikrofon eingebracht, so dass der Nutzer entsprechend seiner Bedürfnisse einen Kopf- beziehungsweise Ohrabstand einstellen kann.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1a eine perspektivische Ansicht einer ersten Ausführungsform des Akustikmoduls,
Figur 1b eine schematische Ansicht von oben auf die erste Ausführungsform des Akustikmoduls gemäß Figur 1a,
Figur 2a eine perspektivische Ansicht einer alternativen Ausführungsform des Akustikmoduls zu Figur 1,
Figur 2b eine schematische Ansicht von oben auf die alternative Ausführungsform des Akustikmoduls gemäß Figur 2a,
Figur 3 eine perspektivische Ansicht einer alternativen Ausführungsform zu Figur 2,
Figur 4 eine weitere alternative Ausführungsform des Akustikmoduls zu Figur 3,
Figuren 5a und 5b eine perspektivische Ansicht einer weiteren alternativen Ausführungsform zu Figur 4 und
Figuren 6a bis 6c schematische Ansichten einer weiteren alternativen Ausführungsform zu Figur 2
Figuren 7a und 7b schematische Ansichten einer weiteren alternativen Ausführungsform zu Figur 2.

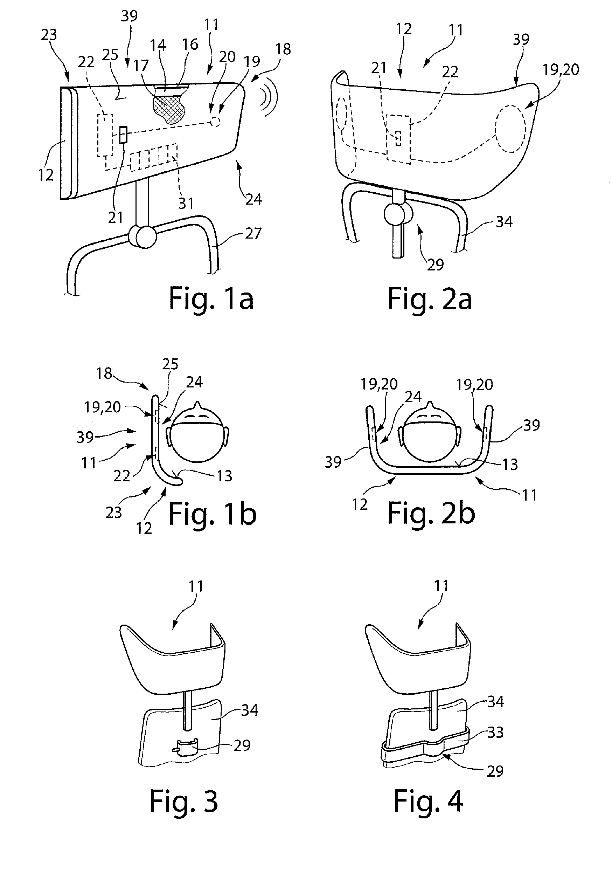

In Figur 1a ist eine perspektivische Ansicht einer ersten Ausführungsform eines Akustikmoduls 11 dargestellt. Die Figur 1b zeigt eine schematische Ansicht von oben auf das Akustikmodul 11 gemäß Figur 1a. Dieses Akustikmodul 11 umfasst einen flächenförmigen Grundkörper 12, der zumindest eine schallabsorbierende Schicht umfasst. Dieser Grundkörper 12 dient als Kopfstütze und umfasst eine Anlagefläche 13. Dabei kann dieser Grundkörper 12 nur sehr schmal streifenförmig ausgebildet sein, welcher eine kleine Anlagefläche 13 aufweist, um lediglich eine prinzipielle Orientierung für den Benutzer zu bilden. An diesen Grundkörper 12 schließt sich ein seitlicher Abschnitt 39 an, der gemäß dem ersten Ausführungsbeispiel feststehend daran angeordnet ist.

Gemäß einer ersten Ausführungsform kann der Grundkörper 12 einen Rahmen 14 aufweisen, der schallabsorbierende Elemente aufnimmt, wodurch die schallabsorbierende Schicht ausgebildet sein kann und insbesondere als Kern 17 des Grundkörpers 12 vorgesehen ist. Der Rahmen 14 kann beispielsweise als ein umlaufender Rahmen vorgesehen sein, der von einer Außenhülle 16 umgeben ist, die beispielsweise schallabsorbierende Materialien umfasst, insbesondere Textilfasern, Faserdämmmaterialien, Schafschurwolle oder dergleichen. Alternativ kann die Außenhülle 16 auch aus schalldurchlässigen Materialien ausgebildet sein. Bei dem Kern 17 aus schallabsorbierenden Materialien kann es sich um offenporige Schäume, aus Materialien mit Mikroperforationen als auch weiteren Faserdämmmaterialien handeln. Alternativ kann vorgesehen sein, dass die schallabsorbierende Schicht, welche den Kern 17 bildet, ohne einen Rahmen 14 ausgebildet ist, sofern die schallabsorbierenden Materialien eine hinreichende Eigensteifigkeit aufweisen. Alternativ kann für den Rahmen 14 auch eine Gitterstruktur oder Wabenstruktur oder dergleichen vorgesehen sein, wobei die Hohlräume dieser Struktur wiederum mit schallabsorbierenden Materialien ausgefüllt sein können.

Des Weiteren kann alternativ vorgesehen sein, dass ein solcher Rahmen 14 oder eine Gitterstruktur oder Wabenstruktur ohne schallabsorbierende Elemente oder Materialien von einer schallabsorbierenden Außenhülle 16 umgeben ist und die schallabsorbierende Schicht durch diese Außenhülle 16 gebildet ist. Bei den vorgenannten Materialien für die Schallabsorption kann es sich um natürliche und/oder künstlich hergestellte Materialien oder eine Kombination hiervon handeln.

Der flächenförmige Grundkörper 12 weist gemäß dem Ausführungsbeispiel eine länglich rechteckförmige Kontur auf, der unmittelbar in den Abschnitt 39 übergeht. Das Akustikmodul 11 ist flächenförmig beziehungsweise trennwandähnlich ausgebildet. Der Grundkörper 12 und der schwenkbare Abschnitt 39 wirken gegenüber der Umgebung schirmend. In einem vorderen Bereich 18 des Abschnitts 39 sind beispielsweise zumindest ein Lautsprecher 19 und zumindest ein Mikrofon 20 vorgesehen. Im mittleren Bereich des Abschnitts 39 kann beispielsweise ein Bedienelement 21 vorgesehen sein, welches unmittelbar an einer Steuerungseinrichtung 22 vorgesehen ist oder mit dieser in Verbindung steht. Die Steuerungseinrichtung 22 kann drahtlos oder kabelgebunden an ein Telefon, Mobiltelefon oder eine Datenverarbeitungseinrichtung angebunden sein. Im hinteren Bereich 23 des Abschnitts 39 kann ein umgebogener Rand als Grundkörper 12 vorgesehen sein, der es dem Benutzer ermöglicht, seinen Kopf daran abzustützen. Alternativ kann dieser entfallen, so dass der vordere Bereich 18 und der hintere Bereich 23 optisch gleich ausgebildet sind.

Der flächenförmige Abschnitt 39 des Grundkörpers 12 umfasst eine Schallabsorptionsebene 25, die in der Außenhülle 16 oder im Kern 17 oder dazwischen liegen kann. Bevorzugt sind in oder benachbart zur Schallabsorptionsebene der zumindest eine Lautsprecher 19 und das zumindest eine Mikrofon 20 vorgesehen. Vorteilhafterweise ist das zumindest eine Bedienelement 21 ebenfalls in dieser Ebene angeordnet, so dass der Benutzer beim Schwenken des Kopfes unmittelbar einen Blick auf das Bedienelement 21 und ein gegebenenfalls vorgesehenes Display der Steuerungseinrichtung 22 im Blick hat. Der Lautsprecher 19 und das Mikrofon 20 sind bevorzugt in der Längsachse des flächenförmigen Grundkörpers 12 vorgesehen, so dass das Akustikmodul 11 beidseitig zum Kopf des Benutzers verwendbar ist.

Das Akustikmodul 11 kann gemäß der in Figur 1a dargestellten Ausführungsform fest mit einer Armlehne 27 oder einer sonstigen Komponente eines nicht näher dargestellten Mobiliars, insbesondere einem Stuhl, angeordnet sein. Alternativ kann dieses in Figur 1 dargestellte Akustikmodul 11 auch Befestigungselemente 29 umfassen, welche in den nachfolgenden Figuren noch näher beschrieben werden, um das Akustikmodul 11 bedarfsweise an der Armlehne, der Rückenlehne oder einem sonstigen Teil des Stuhls anzubringen.

Bevorzugt ist vorgesehen, dass der Lautsprecher 19 und das Mikrofon 20 getrennt zueinander angeordnet sind, um eine verbesserte Sprachaufnahme und einen verringerten Eintrag von Störgeräuschen zu ermöglichen. Der Lautsprecher und das Mikrofon sind bevorzugt durch Kabel mit der Steuerungseinrichtung 22 verbunden. Diese Steuerungseinrichtung kommuniziert vorteilhafterweise drahtlos mit einer nicht näher dargestellten Datenverarbeitungseinrichtung, wie beispielsweise einem PC, Notebook, Tablet oder dergleichen oder mit einem Tisch- oder Mobiltelefon, um beispielsweise auch Web- oder Videokonferenzen durchführen zu können. Zusätzlich weist die Steuerungseinrichtung 22 eine Sensorik auf, um eine angepasste Lautstärke der eingebauten Lautsprecher zu regeln, die in Abhängigkeit von der Übertragungsqualität, von Hintergrundgeräuschen oder sonstigen Störeinflüssen gegeben ist.

Des Weiteren sind in dem Akustikmodul bevorzugt Akkumulatoren 31 zur Energieversorgung der Steuerungseinrichtung 22 sowie des Lautsprechers 19 und des Mikrofons 20 vorhanden.

Die Höhe des flächenförmigen Grundkörpers 12 und des Abschnitts 39 können an die eines Kopfes des Nutzers angepasst sein. Die Länge des flächenförmigen Abschnitts 39 am Grundkörper 12 kann zumindest die Kopfgröße umfassen, wobei bevorzugt eine längere Erstreckung vorgesehen ist, um eine verbesserte Schallabsorptionswirkung zur erzielen.

In Figur 2a ist eine perspektivische Ansicht einer alternativen Ausführungsform des Akustikmoduls 11 dargestellt. Die Figur 2b zeigt eine schematische Ansicht von oben auf die alternative Ausführungsform des Akustikmoduls 11 gemäß Figur 1 b. Bei dieser Ausführungsform ist vorgesehen, dass das Akustikmodul 11 sich nicht nur einseitig entlang eines Kopfes des Benutzers erstreckt, sondern beidseitig und in Form einer Kopfstütze ausgebildet ist. Beispielsweise ist ein U-förmiger Rahmen 14 vorgesehen, wobei die beiden seitlichen Endabschnitte des U-förmigen Rahmens 14, 19 und das Mikrofon 20 aufweisen, so dass beidseitig Informationen aufgenommen und wiedergegeben werden können. Der Rahmen 14 kann aus einem biegbaren Material bestehen, so dass die Öffnungsweite der beiden Schenkel des Rahmens 14 flexibel durch den Benutzer einstellbar ist.

Dieses Akustikmodul 11 ist beispielsweise über ein lösbares Befestigungselement 29 mit einer Rückenlehne oder mit einem Gestell am Stuhl verbunden. Bei solchen Befestigungselementen 29 kann es sich um ein einfaches Klicksystem handeln. Ebenso können Deck-, Klemm-, Klebe-, Klett-, Schraubverbindungen, Steck- oder Pressverbindungen, insbesondere pneumatische Pressverbindungen, vorgesehen sein.

In Figur 3 ist eine alternative Ausführungsform zu Figur 2 dargestellt. Diese Ausführungsform weist ein Akustikmodul 11 gemäß Figur 2 auf. Das Befestigungselement 29 ist beispielsweise als Steckelement ausgebildet und kann bezüglich der Höhe in unterschiedlichen Stellungen verrastbar aufgenommen werden.

In Figur 4 ist eine weitere alternative Ausführungsform des Befestigungselementes 29 für das Akustikmodul 11 gemäß Figur 2 dargestellt. Beispielsweise kann an einer Rückenlehne eines Bürostuhls eine Befestigungsmanschette 33 angeklipst werden, so dass darauf folgend das Akustikmodul daran befestigbar und vorteilhafterweise wiederum in der Höhe individuell durch eine entsprechende Verrastung einstellbar ist.

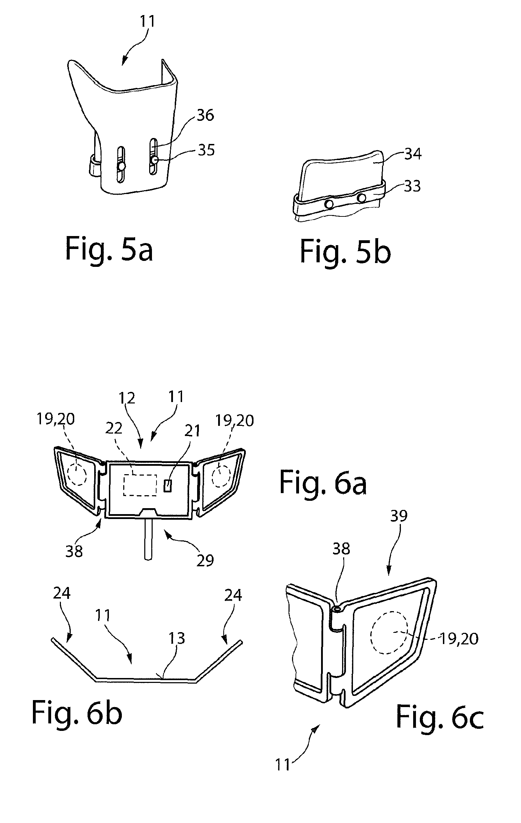

In den Figuren 5a und 5b ist eine weitere alternative Ausgestaltung zur Befestigung des Akustikmoduls 11 zu Figur 4 dargestellt. Beispielsweise ist eine Befestigungsmanschette mit zwei Steckbolzen 35 vorgesehen, welche jeweils in eine Langlochausnehmung 36 am Körper des Akustikmoduls 11 angreifen, so dass dieses Akustikmodul 11 an einer Rückenlehne 34 eines Stuhls befestigbar und individuell in der Höhe einstellbar ist. Das Akustikmodul 11 gemäß Figur 2 ist dabei derart angepasst, dass ein verlängerter Rückenabschnitt zur Aufnahme der Langlochöffnungen 36 gegeben ist.

In den Figuren 6a bis 6c ist eine weitere alternative Ausführungsform zu Figur 2 dargestellt. Die Figur 6a zeigt eine perspektivische Ansicht des Akustikmoduls 11. Figur 6b zeigt eine Ansicht von oben, und Figur 6c zeigt eine schematisch vergrößerte Ansicht eines Scharnieres 38 für eine schwenkbare Anordnung von Abschnitten 39 des Grundkörpers 12.

Bei dieser Ausführungsform besteht der flächenförmige Grundkörper 12 beispielsweise aus drei einzelnen Rahmen, die über Scharniere 38 schwenkbar miteinander verbunden sind. In den Abschnitten 38 sind bevorzugt das zumindest eine Mikrofon 20 und der zumindest eine Lautsprecher 19 angeordnet. Die Abschnitte 39 können benutzerspezifisch auf einen Abstand zum Kopf beziehungsweise Ohr eingestellt werden. Im Übrigen gelten die Ausführungen zu den vorher beschriebenen Ausführungsformen.

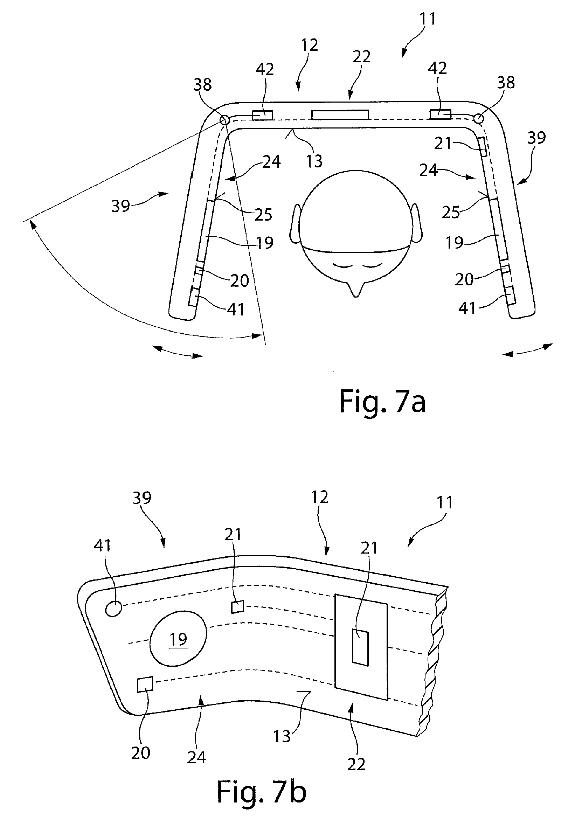

In Figur 7a ist eine schematische Ansicht von oben auf eine alternative Ausführungsform des Akustikmoduls 11 zu Figur 6 und in Figur 7b eine schematische Seitenansicht im Teilschnitt des Akustikmoduls 11 gemäß Figur 7a dargestellt. Der Aufbau des Akustikmoduls 11 gemäß Figur 7a entspricht grundsätzlich dem gemäß Figur 6a. Die Abschnitte 39 sind schwenkbar zum Grundkörper 12, beispielsweise über ein Scharnier oder ein Gelenk, angeordnet. Dadurch können die schwenkbaren Abschnitte 39 in einer gemeinsamen Ebene mit dem Grundkörper 12 ausgerichtet sein. Ebenso können diese eine U-förmige Position einnehmen, wie diese beispielsweise in Figur 7a dargestellt ist oder auch eine solche Position, bei der die beiden Abschnitte parallel zueinander ausgerichtet sind. Es ist auch möglich, dass sich der Schwenkbereich derart erstreckt, dass die beiden Enden der schwenkbaren Abschnitte 39 in einem geringeren Abstand zueinander angeordnet werden können als der Abstand der Scharniere 38 ist.

In dem oder den schwenkbaren Abschnitten 39 sind beispielsweise ein Lautsprecher 19 seitlich und nach vorne versetzt gegenüber dem Mikrofon 20 angeordnet, so dass diese Position jeweils auf einen gemittelten Abstand zwischen dem Mund und Ohr eines Benutzers angepasst ist. Zusätzlich ist bei dieser Ausführungsform zumindest ein Abstandssensor 41 vorgesehen, welcher einen Abstand zum Kopf oder Ohr des Benutzers und/oder eine Position des Kopfes des Benutzers erfassen kann. Dieser Abstandssensor 41 steht mit der Steuerungseinrichtung 22 in Verbindung. In dem Akustikmodul 11 ist bevorzugt ein Motor 42 vorgesehen, der zumindest ein Scharnier 38 antreibt. Alternativ kann für jedes Scharnier 38 ein Motor 42 vorgesehen sein. Diese Motoren 42 werden von der Steuerungseinrichtung 22 in Abhängigkeit der erfassten Signale des oder der Abstandssensoren 41 angetrieben

In der Steuerungseinrichtung 22 sind bevorzugte Werte für den Abstand und/oder die Position zwischen dem Lautsprecher 19 und/oder Mikrofon 20 eines feststehenden oder schwenkbaren Abschnitts 39 zum Kopf des Benutzers hinterlegt. Dadurch kann beispielsweise beim Betätigen eines Bedienelementes 21 der Steuerungseinrichtung 22 der schwenkbare Abschnitt 39 selbständig in eine optimale Position zum Kopf des Benutzers verfahren. Dadurch können akustisch optimale Bedingungen für den Benutzer geschaffen werden.

Alternativ kann beim Positionieren des Kopfes zum Grundkörper 12 automatisch ein solcher Einstellungsprozess erfolgen, so dass der zumindest eine schwenkbare Abschnitt 39 selbständig eine optimale Position zum Benutzer einnimmt.

Durch die Einbringung von zumindest einem Abstandssensor 41 und zumindest einem Motor 42, der ein Gelenk 38 beziehungsweise den zumindest einen schwenkbaren Abschnitt 39 ansteuert, kann ein autoadaptives Akustikmodul 11 geschaffen werden, um akustisch optimale Bedingungen für den Nutzer zu schaffen.

Die schwenkbaren Abschnitte 39 können bei der Verwendung von zwei Motoren 42 unabhängig voneinander angesteuert werden, so dass auch auf eine individuelle Nutzerposition eine Einstellung ermöglicht ist. Bei der Verwendung von nur einem Motor 42 ist eine synchrone Ansteuerung der Schwenkbewegung der beiden schwenkbaren Abschnitte 39 zum Grundkörper 12 mittels einer Mechanik vorgesehen.

Zumindest ein Abstandssensor 41 kann ebenso in den feststehenden Abschnitt 39 des Grundkörpers 12 eines Akustikmoduls 11 gemäß den Figuren 1a und 1b vorgesehen sein. Beim Betätigen eines Bedienelementes 21 der Steuerungseinrichtung 22 wird dieser zumindest eine Abstandssensor 41 aktiviert. Sofern der Benutzer einen optimalen Abstand und/oder eine optimale Position mit seinem Kopf zum Abschnitt 39 eingenommen hat, kann ein Signal durch die Steuerungseinrichtung 22 abgegeben werden, insbesondere ein akustisches Signal, so dass dem Benutzer angezeigt wird, dass nunmehr optimale akustische Bedingungen für ihn geschaffen sind. Sollte der Benutzer seinen Abstand und/oder seine Position zum Abschnitt 39 verändern, so dass dieser außerhalb eines optimalen Akustikbereiches kommt, kann wiederum ein entsprechendes Signal ausgegeben werden.

Eine solche Überwachung oder ein solcher Hinweis kann auch bei den schwenkbaren Abschnitten 39 eingestellt werden, ohne dass diese autoadaptiv an die veränderte Position nachfahren. Wahlweise hat der Benutzer die Möglichkeit, die eine oder andere Funktion einzustellen.

Diese vorbeschriebenen Akustikmodule weisen somit den Vorteil auf, dass diese flexibel einsetzbar und körpernah zum Benutzer vorgesehen sind, jedoch nicht direkt am Körper des Nutzers anliegen. Dadurch bestehen insbesondere gegenüber der gemeinsamen Nutzung von Arbeitsplätzen und/oder Tischtelefonen hygienische Vorteile. Darüber hinaus kann die akustische Gesamtsituation einer Büroumgebung verbessert werden. Zudem kann durch die Ausbildung des Akustikmoduls 11 die akustische und visuelle Privatheit des Nutzers verbessert werden.

Die vorbeschriebenen Ausführungsformen können in Arbeits- und Büroräumen, aber auch in Verkehrsmitteln, wie beispielsweise Zügen oder Flugzeugen, vorgesehen sein.

## Patentansprüche

1. Akustikmodul zur Schallabsorption und Verbesserung der Kommunikation, insbesondere in Arbeits- und Büroumgebungen,
- mit einem flächenförmigen Grundkörper (12), der zumindest eine schallabsorbierende Schicht umfasst und eine Kopfstütze bildet,
- mit zumindest einem am Grundkörper (12) angeordneten Abschnitt (39), der trennwandähnlich ausgebildet und zum flächigen Grundkörper (12) ausrichtbar ist,
- mit zumindest einem Mikrofon (20) und zumindest einem Lautsprecher (19), die mit einer Steuerungseinrichtung (22) verbunden sind, und am oder in dem Abschnitt (39) am Grundkörper (12) vorgesehen sind,
**dadurch gekennzeichnet, dass** zumindest ein feststehender oder zumindest ein schwenkbarer Abschnitt (39) am Grundkörper (12) vorgesehen ist, der eine Seitenfläche (24) umfasst, welche eine Schallabsorptionsebene (25) bildet und dass in oder an dem Abschnitt (39) zumindest ein Abstandssensor (41) vorgesehen ist, der zumindest einen Abstand zwischen der Seitenfläche (24) des Abschnitts (39) und einem Ohr des Benutzers erfasst.

2. Akustikmodul nach Anspruch 1, **dadurch gekennzeichnet, dass** der zumindest eine Abstandssensor (41) zumindest ein Signal an eine Steuerungseinrichtung (22) weiterleitet, welche zumindest einen Motor (42) zur Ansteuerung einer Schwenkbewegung des schwenkbaren Abschnitts (39) zum Grundkörper (12) ansteuert.

3. Akustikmodul nach Anspruch 1, **dadurch gekennzeichnet, dass** der zumindest eine schwenkbare Abschnitt (39) in einem Winkel von 30 bis 110° zur Anlagefläche (13) des Grundkörpers (12) schwenkbar ist.

4. Akustikmodul nach Anspruch 1, **dadurch gekennzeichnet, dass** an dem Grundkörper (12) zwei schwenkbare Abschnitte (39) angeordnet sind, die innerhalb eines Schwenkbereichs aus einer gemeinsamen Ebene zum Grundkörper (12) in eine im Wesentlichen U-förmige Anordnung überführbar sind.

5. Akustikmodul nach Anspruch 1, **dadurch gekennzeichnet, dass** der zumindest eine Abstandssensor (41) im Abschnitt (39) einen vorbestimmten Abstand oder eine vorbestimmte Position des Kopfes des Benutzers zum Abschnitt (39) erfasst und durch Ausgabe eines Signals, insbesondere eines akustischen Signals, bestätigt oder beim Verlassen eines vorbestimmten Abstandes oder einer vorbestimmten Position des Kopfes des Benutzers zum Akustikmodul (11) ein Signal ausgibt.

6. Akustikmodul nach Anspruch 1, **dadurch gekennzeichnet, dass** der Abstandssensor (41) nach Erreichen eines vorbestimmten Abstands zwischen der Seitenfläche (24) des zumindest einen schwenkbaren Abschnitts (39) und dem Ohr des Benutzers ein Signal zum Stillsetzen der Schwenkbewegung an die Steuerungseinrichtung (22) ausgibt.

7. Akustikmodul nach Anspruch 1, **dadurch gekennzeichnet, dass** der Abstandssensor (41) während der Benutzung des zumindest einen Lautsprechers (19) und des zumindest einen Mikrofons (20) zumindest in Zeitintervallen den Abstand zwischen der Seitenfläche (24) des schwenkbaren Abschnitts (39) und/oder des Benutzers erfasst und vorzugsweise eine aktive Anpassung des Abstandes zwischen dem schwenkbaren Abschnitt (39) und dem Ohr des Benutzers ansteuert.

8. Akustikmodul nach Anspruch 1, **dadurch gekennzeichnet, dass** die beiden schwenkbaren Abschnitte (39) unabhängig in der Schwenkposition zueinander oder synchron zum Grundkörper (12) ansteuerbar sind.

9. Akustikmodul nach Anspruch 1, **dadurch gekennzeichnet, dass** der Lautsprecher (19) und das Mikrofon (20) als eine Einheit vorgesehen sind oder dass der Lautsprecher (19) und das Mikrofon (20) getrennt zueinander angeordnet sind und das zumindest eine Mikrofon (20) einem Mund des Benutzers und der zumindest eine Lautsprecher (19) einem Ohr des Benutzers zugeordnet sind.

10. Akustikmodul nach einem der vorhergehenden Ansprüche, **dadurch gekennzeichnet, dass** die Steuerungseinrichtung (20), welche bevorzugt am Grundkörper (12) zumindest ein Bedienelement (21) zur Ansteuerung der Steuerungseinrichtung (22) aufweist, ein Funkmodul zur drahtlosen Kommunikation mit einer Datenverarbeitungseinrichtung, insbesondere einem PC, Notebook oder Tablet, oder mit einem Tisch- oder Mobilfunktelefon aufweist.

11. Akustikmodul nach einem der vorhergehenden Ansprüche, **dadurch gekennzeichnet, dass** das zumindest eine Mikrofon (20) als Richtmikrofon ausgebildet ist und die Steuerungseinrichtung das zumindest eine Mikrofon für eine Auslegung des Sprachfrequenzbereichs und einer Nahbesprechung ansteuert.

12. Akustikmodul nach einem der vorhergehenden Ansprüche, **dadurch gekennzeichnet, dass** die schallabsorbierende Schicht als Kern (17) und/oder Außenhülle (16) ausgebildet ist, und vorzugsweise die schallabsorbierende Außenhülle (16) aus Textilfasern oder Faserdämmmaterialien besteht.

13. Akustikmodul nach einem der vorhergehenden Ansprüche, **dadurch gekennzeichnet, dass** der Grundkörper (12) einen Rahmen (14), eine Gitterstruktur und/oder einen Wabentragkörper umfasst.

14. Akustikmodul nach einem der vorhergehenden Ansprüche, **dadurch gekennzeichnet, dass** im Rahmen (14) des Grundkörpers (12) ein offenporiger Schaum, Materialien mit Mikroperforationen oder Faserdämmmaterialien vorgesehen sind, oder die Zwischenräume der Gitterstruktur und/oder Wabentragkörper mit einem schallabsorbierenden Material ausgebildet sind und den Kern (17) bilden.

15. Akustikmodul nach einem der vorhergehenden Ansprüche, **dadurch gekennzeichnet, dass** der Grundkörper (12) einen zu seiner Längsachse symmetrischen Aufbau aufweist und der zumindest eine Lautsprecher (19) und das zumindest eine Mikrofon in der Längsachse liegen.
